(19) Europäisches Patentamt
European Patent Office
Office européen des brevets

(11) Publication number: **0 183 056**
**B1**

(12) **EUROPEAN PATENT SPECIFICATION**

(45) Date of publication of patent specification: **19.04.89**

(51) Int. Cl.⁴: **C 08 L 83/04,** C 08 K 3/34, C 08 K 3/28

(21) Application number: **85113517.8**

(22) Date of filing: **24.10.85**

(54) **Thermally conductive room temperature vulcanizable compositions.**

(30) Priority: **29.10.84 US 665468**
**29.10.84 US 665469**

(43) Date of publication of application:
**04.06.86 Bulletin 86/23**

(45) Publication of the grant of the patent:
**19.04.89 Bulletin 89/16**

(84) Designated Contracting States:
**AT BE DE FR GB IT NL**

(56) References cited:
**GB-A- 965 675**
**US-A-3 499 859**

**CHEMICAL ABSTRACTS, vol. 95, no. 20, 16th November 1981, page 69, abstract no. 170709s, Columbus, Ohio, US; C.M. HSIEH et al.: "New simplified method for improving the thermal stability of silicone rubbers", & K'O HSUEH T'UNG PAO 1981, 26(12), 737**

(73) Proprietor: **Wacker Silicones Corporation**
**Adrian Michigan 49221 (US)**

(72) Inventor: **Pate, Michelle**
**131 Park Street**
**Adrian Michigan 49221 (US)**
Inventor: **Getson, John C.**
**4394 Hampton Court**
**Adrian Michigan 49221 (US)**
Inventor: **Streusand, Marie J.**
**1622 York Terrace**
**Saline Michigan 48176 (US)**

(74) Representative: **Wagner, Helga, Dr. et al**
**c/o Wacker-Chemie GmbH Prinzregentenstrasse 22**
**D-8000 München 22 (DE)**

(56) References cited:
**PATENTS ABSTRACTS OF JAPAN, vol. 6, no. 44 (C-95)922r, 19th March 1982; & JP - A - 56 161 461 (HITACHI SEISAKUSHO K.K.) 11-12-1981**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to room temperature vulcanizable organopolysiloxane compositions and more particularly to thermally conductive room temperature vulcanizable organopolysiloxane compositions.

Background of the invention

Inorganic particulate materials have been incorporated in organopolysiloxane compositions to impart certain properties to the resultant elastomers. For example, boron nitride has been incorporated in organopolysiloxane compositions to provide silicone elastomers which resist degradation when exposed to elevated temperatures. Likewise, boron nitride has been incorporated in organopolysiloxane compositions to enhance the thermal conductivity of the resultant elastomers. This is particularly important since in certain electrial applications, the electrical components generate enough heat to cause a change in the resistance of the electrical components which often causes the electrical circuit to function in an abnormal manner. Therefore, it would be desirable to have an insulating material which can be applied to electrical components and readily conducts heat away from these components. Also, it would be desirable to have an insulating material having improved physical properties as well as increased filler loadings, thereby reducing the material costs.

Filler materials, such as boron nitride have been incorporated in two-component, thermally conductive room temperature vulcanizable compositions. For example, U.S. Patent No. 3,499,856 to Matherly describes a two-component organopolysiloxane composition containing boron nitride as the primary filler. Also, U.S. Patent No. 4,292,225 to Theodore et al describes a highly filled two-component composition containing an organopolysiloxane, a boron refractory powder and silica.

Room temperature vulcanizable organopolysiloxane compositions containing various fillers are also described in U.S. Patent No. 2,843,555 to Berridge and U.S. Patent No. 3,127,363 to Nitzsche et al. Neither of these patents, however, disclose thermally conductive elastomers containing fillers such as contemplated herein.

It has unexpectedly been found that silicon nitride particles can be incorporated in room temperature vulcanizable organopolysiloxane compositions in increased loadings to form silicone elastomers having improved physical properties and thermal conductivity.

Therefore, it is an object of this invention to provide a thermally conductive room temperature vulcanizable organopolysiloxane composition. Another object of this invention is to provide a highly filled room temperature vulcanizable organopolysiloxane composition which forms an elastomer having desirable physical properties and thermal properties. Still another object of this invention is to provide silicone elastomers having superior thermal conductive properties. A further object of this invention is to provide a one or two-component organopolysiloxane composition which vulcanizes at room temperature to form a silicone elastomer having superior thermal conductive properties.

Summary of the invention

The foregoing objects and others which will become apparent from the following description are accomplished in accordance with this invention, generally speaking, by providing a room temperature vulcanizable organopolysiloxane composition which is obtained by mixing a hydroxyl-containing organopolysiloxane with a crosslinking agent which is capable of crosslinking with the hydroxyl-containing organopolysiloxane and from 30 to 95 percent by weight of a filler, of which at least 10 percent by weight of the filler is silicon nitride particles and a catalyst, if desired.

Description of the invention

The hydroxyl-containing organopolysiloxane may be represented by the general formula

$$HO\left(\begin{array}{c}R\\|\\SiO\\|\\R\end{array}\right)_n H$$

where R, which may be the same or different is a monovalent or halogenated monovalent hydrocarbon radical having from 1 to 18 carbon atoms and n is a number of at least 2.

Generally, these organopolysiloxanes have from about 1.8 to about 2.25 organic groups per silicon atom and more preferably from about 1.9 to about 2.1 organic groups per silicon atom.

Even though the organopolysiloxanes are generally linear polymers having diorganosiloxane units ($R_2SiO$), they may also contain up to about 2 mole percent of other units such as $RSiO_{3/2}$, $R_3SiO_{0.5}$ and/or $SiO_{4/2}$ units, in which R is the same as above. These organopolysiloxanes preferably have a viscosity of from about 5 to 300,000 mPa · s at 25°C and more preferably a viscosity of from about 500 to 100,000 mPa · s at 25°C.

These hydroxyl-terminated organopolysiloxane polymers and methods for preparing the same are described, for example, in U.S. Patent No. 2,607,792 to Warrick and U.S. Patent No. 2,843,555 to Berridge.

Examples of monovalent hydrocarbon radicals represented by R above are alkyl radicals, such as methyl, ethyl, propyl, butyl, hexyl, octyl, decyl and octadecyl radicals; aryl radicals such as the phenyl and naphthyl radicals; alkenyl radicals such as the vinyl and allyl radicals; aralkyl radicals such as the benzyl and phenylethyl, phenylpropyl and phenylbutyl radicals; alkaryl radicals such as tolyl, xylyl and ethylphenyl radicals and cycloalkyl radicals such as cyclopropyl, cyclobutyl and cyclohexyl radicals. Examples of halogenated monovalent hydrocarbon radicals are halogenated derivatives of the foregoing radicals such as the 3,3,3-trifluoropropyl radical and chlorophenyl radicals.

The compositions of this invention can be crosslinked at room temperature in the presence of atmospheric moisture by adding a crosslinking agent having an average of at least two hydrolyzable groups per molecule to an organopolysiloxane having an average of at least two hydroxyl groups per molecule, and if desired a catalyst to form an elastomer.

These compositions are often referred to as one-component room temperature vulcanizable compositions. Generally, these compositions are prepared under anhydrous conditions, by mixing the organopolysiloxanes having an average of at least two Si-bonded hydroxyl groups with a crosslinking agent having an average of at least two hydrolyzable groups per molecule, and a catalyst, if desired, and the silicon nitride. Other fillers, such as reinforcing and semi- or non-reinforcing fillers, as well as other additives may be incorporated in these compositions.

Crosslinking agents which may be used in the compositions of this invention are silanes or siloxanes having at least 2 hydrolyzable groups per molecule. Examples of suitable hydrolyzable groups are acyloxy groups (—OOCR), aminoxy groups (—ONR'$_2$), amino groups, (—NR'$_2$), acylamino groups (—NR'COR), oximo groups (—ON=CR'$_2$) and phosphato groups

$$[-\underset{\underset{O}{\|}}{P}(OR')_2],$$

where R is the same as above and R' represents the same or different monovalent or substituted monovalent hydrocarbon radicals having up to 8 carbon atoms or hydrogen atoms. The hydrocarbon radicals recited above also apply to the monovalent hydrocarbon radical represented by R' above. Examples of substituted monovalent hydrocarbon radicals represented by R' are halogenated hydrocarbon radicals such as the halogen substituted monovalent hydrocarbon radicals recited above as well as the 3,3,3-trifluoropropyl radical and o-, m- and p- chlorophenyl radicals.

Examples of acyloxy groups having from 1 to 18 carbon atoms are formyloxy, acetoxy, propionyloxy, valeroyloxy, caproyloxy, myristoyloxy and stearoyloxy groups.

Examples of aminoxy groups are dimethylaminoxy, diethylaminoxy, dipropylaminoxy, dibutylaminoxy, dioctylaminoxy, diphenylaminoxy, ethylmethylaminoxy and methylphenylaminoxy groups.

Examples of preferred amino groups are n-butylamino, sec-butylamino and cyclohexylamino groups.

An example of an acylamino group is the benzoylmethylamino group.

Examples of preferred oximo groups are acetophenonoximo, acetonoximo, benzophenonoximo, 2-butanonoximo, diisopropylketoximo and chlorocyclohexanonoximo groups.

Examples of phosphato groups are dimethylphosphato, diethylphosphato, dibutylphosphato, dioctylphosphato, methylethylphosphato, methylphenylphosphato and diphenylphosphato groups.

Examples of preferred silanes which may be employed as crosslinking agents in the composition of this invention are methyltriacetoxysilane, tetraacetoxysilane, methyl - tert - butoxyacetoxysilicon compounds having a total of three tert - butoxy and acetoxy groups per molecule, methyltris - (cyclohexylamino)silane, methyltris - (sec - butylamino)silane, isopropoxytriacetoxysilane, methyltris - (2 - butanonoximo)silane, methyltris - (diethylphosphato) - silane and methyltris - (isopropylamino) - silane as well as methyl - tris - (diethylaminoxy) - silane.

These compositions may also be crosslinked by the addition of polyalkoxysilanes of the formula

$$(R'''O)_xSiR''_{4-x}$$

or polyalkoxysilanes in which the silicon atoms are linked through ≡Si—O—Si≡ linkages and the remaining valences of the silicon atoms are satisfied by R'''O and R'' radicals and catalysts. In the above formula, R''' is a monovalent hydrocarbon radical having from 1 to 8 carbon atoms and R'' is a monovalent hydrocarbon radical or a halogenated monovalent hydrocarbon radical having from 1 to 8 carbon atoms and x is 3 or 4. These compositions are often referred to as two-component room temperature vulcanizable compositions.

Examples of monovalent hydrocarbon radicals represented by R''' are methyl, ethyl, propyl, butyl, hexyl, octyl, phenyl, vinyl, allyl, ethylallyl and the like. Radicals represented by R'' may be the same as the radicals represented by R''' above, as well as the corresponding halogenated groups such as chloromethyl, 2 - bromo - 4,6 - diiodophenyl, 1,2 - difluorovinyl, 3,4 - difluorocyclopentyl, 2 - bromocyclopentene -

2,3 - yl and 4 - chlorohexyl. The polyalkoxysilanes employed herein include mono-organotrihydrocarbonoxysilanes, tetrahydrocarbonoxysilanes and partial hydrolyzates thereof. Specific examples of polyalkoxysilanes are alkyl silicates, such as ethyltrimethoxysilane, methylbutoxydiethoxysilane, propyltripropoxysilane, methyltriethoxysilane, ethyltriethoxysilane, tetraethyl orthosilicate and tetra - n - butyl orthosilicate. Examples of organopolysilicates are ethyl polysilicate, isopropyl polysilicate, butyl polysilicate and partially hydrolyzed ethyl silicates which consists primarily of decaethyltetrasilicate. Examples of polyalkoxysiloxanes are dimethyltetraethoxydisiloxane, trimethylpentabutoxytrisiloxane and the like. The polyalkoxysilanes and polyalkoxysiloxanes employed herein may be used either alone or in combination.

The crosslinking agents are preferably employed in an amount of from about 0.5 to about 20 percent by weight and more preferably from about 1 to 10 percent by weight based on the weight of the organopolysiloxanes.

These organopolysiloxane compositions are preferably prepared by mixing the hydroxyl-terminated organopolysiloxanes with the crosslinking agents under anhydrous conditions. When the crosslinking agent is a polyalkoxysilane or polyalkoxysiloxane, then it is preferred that catalysts such as metallic salts of organic carboxylic acids be employed. Examples of suitable acid radicals are those which yield the acetate, the butyrate, the octoate, the laurate, the linoleate, the stearate and the oleate. The metal ion of the metallic salt may consist of lead, tin, zirconium, antimony, iron, cadmium, barium, calcium, titanium, bismuth and manganese. Examples of suitable salts are tin napththenate, lead octoate, tin octoate, iron stearate, tin oleate, antimony octoate, tin butyrate and the like. Other catalysts which may be used are bis - (acetoxybutylphenyltin)oxide, bis - (acetoxydibutyltin)oxide, bis - (tributyltin)oxide, bis - [tris - (o - chlorobenzyl)tin] oxide, dibutoxy dibutyltin, tris - t - butyltin hydroxide, triethyltin hydroxide, diamyl dipropoxytin, dibutyltin dilaurate, dioctyltin dilaurate, diphenyloctyltin acetate, dodecyldiethyltin acetate, trioctyltin acetate, triphenyltin acetate, triphenyltin laurate, triphenyltin methacrylate, dibutyltin butoxy chloride and the like.

These catalysts may be dispersed in a solvent and then added to the hydroxyl-terminated organopolysiloxane or they may be dispersed on a suitable filler or additive and thereafter milled with the polymer. Examples of suitable hydrocarbon solvents are benzene, toluene, xylene and the like; halogenated hydrocarbons such as perchloroethylene or chlorobenzene; organic ethers such as diethyl ether, dibutyl ether as well as hydroxyl free fluid polysiloxanes. It is preferred that the solvents be of sufficient volatility to vaporize off at room temperature.

The amount of catalyst used may range from about 0.05 to about 10 percent by weight, preferably from about 0.1 to 2 percent by weight based on the weight of the composition. A mixture of two or more of the catalysts enumerated above may be used, if desired. The amount of catalyst added to the composition is generally determined by the requirements of the particular job, especially the pot-life or working time required.

In order to facilitate mixing of the crosslinking agents and/or crosslinking catalysts in the compositions, the crosslinking agents and/or the crosslinking catalysts can be dissolved or dispersed in a solvent which is inert with respect to the reactants or the catalysts employed. Examples of suitable solvents or dispersing agents are organopolysiloxanes, such as dimethylpolysiloxanes having trimethylsiloxy terminal groups and organic solvents which evaporate at room temperature. Examples of suitable organic solvents are chlorinated hydrocarbons such as trichloroethylene. When organic solvents or chlorinated organic solvents are employed, they are preferably employed in an amount of less than about 20 percent by weight based on the weight of the composition to be crosslinked.

Crosslinking may be accelerated by applying heat or by adding water in addition to that present in the atmosphere, or by the addition of carbon dioxide, where the crosslinking agent is an aminosilane or aminosiloxane.

The silicon nitride particles employed in the compositions of this invention are polycrystalline or amorphous materials having an average particle size of from about 0.5 to about 350 microns (μm) and more preferably from about 40 to 250 microns (μm). The particle size is not critical as long as the particles are not so large as to be difficult to mix with the organopolysiloxane to form a homogeneous mixture.

The silicon nitride particles may be used with other fillers such as reinforcing fillers, i.e., fillers having a surface area of at least 50 $m^2$/gm. Examples of such fillers are precipitated silicon dioxide having a surface area of at least 50 $m^2$/gm and/or pyrogenically produced silicon dioxide. Examples of other reinforcing fillers are the aerogels, alumina, carbon blacks and graphite.

A portion of the fillers can be semi- or non-reinforcing fillers, i.e., fillers which have a surface area of less than 50 $m^2$/gm. Examples of semi- or non-reinforcing fillers are metal oxides, metal nitrides, (except silicon nitride), glass beads, bubbles or fibers, metallic flakes, powders and fibers such as copper, nickel and aluminum, cork, organic resins, polytetrafluoroethylene, polychlorotrifluoroethylene, polyvinyl chloride, bentonite, diatomaceous earth, crushed quartz, mica, and mixtures thereof. Preferred examples of metal oxide fillers are zinc oxide, ferric oxide, alumina and titanium oxide. The fillers may also be treated with, for example, triorganoalkoxysilanes, such as trimethylethoxysilane to coat the surfaces with organosiloxy groups.

The amount of fillers including silicon nitride particles which may be incorporated in the compositions of this invention is not critical and may vary over a wide range. Thus, the amount of filler including silicon

nitride particles may range from about 30 to 95 percent by weight and more preferably from about 40 to 90 percent by weight, based on the weight of the composition, in which at least 10 percent by weight of the filler is silicon nitride particles. More preferably, the amount of silicon nitride particles may range from about 30 to 100 percent by weight based on the weight of the filler. It is, however, preferred that the other fillers employed in the composition not interfere with the thermal conductivity of the resultant composition.

Other additives which can be incorporated in the compositions of this invention include pigments, compression set additives, oxidation inhibitors, plasticizers, adhesion promoters, base stabilizers and other materials commonly employed as additives in the silicone rubber art. Such additives are preferably present in an amount below about 15 percent by weight based on the weight of the composition.

The organopolysiloxane compositions may be compounded in the usual manner for preparing conventional siloxane elastomers. However, when the two-component compositions are stored prior to use, it is essential that either the catalyst or the crosslinking agent such as the polyalkoxysilane or polyalkoxysiloxane be stored separately. In other words, the hydroxylterminated organopolysiloxane, cross-linking agent, silicon nitride particles and other fillers may be compounded and the catalyst added just prior to use. In another method, the organopolysiloxane, catalyst, silicon nitride particles and other fillers may be compounded and the crosslinking agent added just prior to use. Also, the silicon nitride particles and other fillers may be added either to the hydroxyl-terminated organopolysiloxane or the cross-linking agent prior to the addition of the catalyst or immediately after the reactants have been combined. These compositions cure spontaneously at room temperature upon mixing the ingredients, i.e., the hydroxyl-terminated organopolysiloxane, catalyst, cross-linking agent, silicon nitride particles and other fillers.

The compositions of this invention may be used in many applications where it is necessary or desirable that heat be conducted away from the source. Specific applications where these compositions may be employed are as thermally conductive gaskets, as thermally conductive adhesives and as encapsulating agents for electronic components.

In the following examples, all parts and percentages are by weight unless otherwise specified.

Example 1

A room temperature vulcanizable composition is prepared by mixing 250 parts of silicon nitride particles, mesh size: 0,045 mm (available from Afrimet-Indussa, Inc.) with 100 parts of a hydroxyl-terminated polydimethylsiloxane (2000 mPa · s at 25°C) and 5 parts of an "ethyl silicate 40" (available e.g. as ethylsilicate TES 40 from Wacker-Chemie GmbH at a temperature of about 90°C for 1 hour. The resultant composition has a viscosity of about 54,000 mPa · s at 25°C. About 1.2 parts of dibutyltin butoxy chloride is mixed with the resultant composition. The composition is de-aired, molded into test slabs and then cured for 7 days. The physical properties and the thermalconductive properties are shown in the table.

Example'2

The procedure described in Example 1 is repeated, except that 100 parts of a hydroxyl-terminated polydimethylsiloxane having a viscosity of 4000 mPa · s at 25°C is substituted for the polydimethylsiloxane having a viscosity of 2000 mPa · s at 25°C. The resultant composition has a viscosity of about 90,500 mPa · s at 25°C. The physical properties are illustrated in the table.

Example 3

A room temperature vulcanizable composition is prepared by mixing 300 parts of silicon nitride particles (mesh size: 0,045 mm) with 100 parts of a hydroxyl-terminated polydimethylsiloxane having a viscosity of 4000 mPa · s at 25°C, 34 parts of fumed silica which has been treated with hexamethyldisilazane and 16 parts of a trimethylsiloxy-endblocked polydimethylsiloxane having a viscosity of 100 mPa · s at 25°C at a temperature of about 90°C for about 1 hour. About 5 parts of a composition containing about 25 percent by weight of a trimethylsiloxy-endblocked polydimethylsiloxane having a viscosity of 100 mPa · s at 25°C, about 45 percent by weight of tetra-n-propylsilicate and 30 percent by weight of dibutyltin diversatate are mixed with the resultant composition. The composition is de-aired, molded into slabs and then cured for 7 days. The physical properties and thermal conductive properties are shown in the table.

TABLE

| Physical properties | Example 1 | Example 2 | Example 3 |
|---|---|---|---|
| Durometer, Shore A | 81 | 80 | 76 |
| Tensile strength, MPa. | 4.74 | 4.98 | 3.96 |
| Elongation, percent | 63 | 60 | 55 |
| Tear strength N/m | 6480 | 7180 | 5080 |
| Trouser tear | 4.8 | 5.2 | 4.5 |
| Thermal conductivity $J \cdot cm \cdot {}^{-1} sec \cdot {}^{-1}\ {}^{\circ}C^{-1}$ (ASTM D-2214) | $4.0 \times 10^{-3}$ | $3.9 \times 10^{-3}$ | $3.8 \times 10^{-3}$ |

Example 4

The procedure described in Example 1 is repeated, except that 45 parts of silicon nitride particles (mesh size: 0,045 mm) and 300 parts of fumed silica are substituted for the 250 parts of silicon nitride particles. The resultant elastomer exhibits desirable physical properties and thermally conductive properties.

Example 5

The procedure described in Example 1 is repeated, except that 225 parts of silicon nitride particles and 25 parts of nickel flakes are substituted for the 250 parts of silicon nitride particles. The resultant elastomer exhibits desirable physical properties and thermally conductive properties.

Example 6

Thermally conductive silicone compositions are prepared in the following manner:

| Ingredient | Parts |
|---|---|
| Hydroxyl-terminated dimethylpolysiloxane having a viscosity of 4000 mPa · s at 25°C | 112 |
| Silicon nitride particles—mesh size: 0,045 mm (available from Afrimet-Indussa, Inc.) | 300 |
| Methyltris-(cyclohexylamino)silane | 8 |

The silicon nitride particles are added to a mixer containing the hydroxyl-terminated dimethylpolysiloxane fluid in three successive additions of 100 parts each, with a mixing time of 10 minutes between additions. After the final addition of the silicon nitride particles, the composition is mixed until homogeneous. The composition is de-aired and then the methyl-tris-(cyclohexylamino)silane is added under an atmosphere of nitrogen.

The resultant composition is molded to form ASTM test slabs and cured for 7 days at ambient temperature in atmospheric moisture.

The physical properties of the silicone elastomer are shown in the following table.

| Physical properties | |
|---|---|
| Durometer, Shore A | 67 |
| Elongation, percent | 90 |
| Tensile strength, MPa | 3.87 |
| Tear strength, N/m | 7010 |

The thermal conductivity of the silicone elastomer is $3.7 \times 10^{-3}\ J \cdot cm^{-1}\ sec^{-1}\ {}^{\circ}C^{-1}$ as determined in accordance with the procedure described in ASTM D-2214.

Example 7

The procedure of Example 6 is repeated, except that 112 parts of a hydroxyl-terminated

dimethylpolysiloxane fluid having a viscosity of 2000 mPa · s at 25°C are substituted for the hydroxyl-terminated dimethylpolysiloxane having a viscosity of 4000 mPa · s at 25°C. The physical properties of the silicone elastomer are shown in the following table.

| Physical properties | |
|---|---|
| Durometer, Shore A | 72 |
| Elongation, percent | 82 |
| Tensile strength, MPa | 3.89 |
| Tear strength, N/m | 9290 |

The thermal conductivity of the silicone elastomer is $3.4 \times 10^{-3}$ J · $cm^{-1}$ $sec^{-1}$ $°C^{-1}$ as determined in accordance with the procedure described in ASTM D-2214.

Example 8

The procedure of Example 6 is repeated, except that 112 parts of a hydroxyl-terminated dimethylpolysiloxane having a viscosity of 450 mPa · s at 25°C are substituted for the hydroxyl-terminated dimethylpolysiloxane having a viscosity of 4000 mPa · s at 25°C. The physical properties of the resultant elastomer are shown in the following table.

| Physical properties | |
|---|---|
| Durometer, shore A | 70 |
| Elongation, percent | 66 |
| Tensile strength, MPa | 3.51 |

The thermal conductivity of the silicone elastomer is $3.9 \times 10^{-3}$ J · $cm^{-1}$ $sec^{-1}$ $°C^{-1}$ as determined in accordance with the procedure described in ASTM D-2214.

Comparison Example $V_1$

A silicone elastomer is prepared in accordance with the procedure of Example 6, except that boron nitride is substituted for silicon nitride in the following formulation.

| Ingredient | Parts |
|---|---|
| Hydroxyl-terminated dimethylpolysiloxane having a viscosity of 400 mPa · s at 25°C | 100 |
| Boron nitride (mesh size: 0,045 mm) | 75 |
| Methyltris-(cyclohexylamino)-silane | 8 |

The resultant slabs are very brittle and full of deformities which render them unsuitable for testing.

Comparison Example $V_2$

The procedure of Comparison Example $V_1$ is repeated, except that 70 parts of boron nitride are added to the composition. This composition is very stiff and hard to handle in the uncured state.

The physical properties are determined after curing for 7 days in atmospheric moisture.

| Physical properties | |
|---|---|
| Durometer, Shore A | 46 |
| Elongation, percent | 268 |
| Tensile strength, MPa | 2,0 |
| Tear strength, N/m | 8760 |

The thermal conductivity of the silicone elastomer is $2.7 \times 10^{-3}$ J · $cm^{-1}$ $sec^{-1}$ $°C^{-1}$.

Comparison Example $V_3$

The procedure of Example 6 is repeated, except that zinc oxide is substituted for silicon nitride in the following formulation.

| Ingredient | Part |
|---|---|
| Hydroxyl-terminated dimethylpolysiloxane having a viscosity of 4000 mPa · s at 25°C | 100 |
| Zinc oxide | 300 |
| Methyltris-(cyclohexylamino)-silane | 8 |

The physical properties of the resultant silicone elastomer is determined after exposure to atmospheric moisture for 7 days.

| Physical properties | |
|---|---|
| Durometer, Shore A | 44 |
| Elongation, percent | 199 |
| Tensile strength, MPa | 2,07 |
| Tear strength, N/m | 6480 |

The thermal conductivity of the silicone elastomer is $2.7 \times 10^{-3}$ J · cm$^{-1}$ sec$^{-1}$ °C$^{-1}$.

Example 9

The procedure of Example 6 is repeated, except that 8 parts of methyltriacetoxysilane is substituted for methyltris(cyclohexylamino)silane.

The resultant elastomer exhibited good physical and thermal conductivity properties.

Example 10

The procedure of Example 6 is repeated, except that 8 parts of methyltris-(2-butanonoximo)silane is substituted for methyltris-(cyclohexylamino)silane.

The resultant elastomer exhibited good physical and thermal conductivity properties.

Example 11

The procedure of Example 6 is repeated, except that 8 parts of methyltris-(diethylaminoxy)silane is substituted for methyltris-(cyclohexylamino)silane.

The resultant elastomer exhibited good physical and thermal conductivity properties.

Example 12

The procedure of Example 6 is repeated, except that 200 parts of silicon nitride particles are added to the composition instead of 300 parts.

The resultant elastomer exhibited good physical properties, but the thermal conductivity properties are inferior to those of the elastomer described in Example 6.

**Claims**

1. A thermally conductive organopolysiloxane composition which is vulcanizable at room temperature to form an elastomer comprising a hydroxyl-terminated organopolysiloxane, a crosslinking agent having an average of at least two hydrolyzable groups per molecule capable of reacting with the hydroxyl-terminated organopolysiloxane, and from 30 to 95 percent by weight of filler based on the weight of the composition of which at least 10 percent by weight of the filler is silicon nitride particles.

2. The composition of Claim 1, wherein the silicon nitride particles are present in an amount of from 30 to 100 percent by weight based on the weight of the filler.

3. The composition of Claim 1, wherein the hydroxyl-terminated organopolysiloxane is represented by the formula

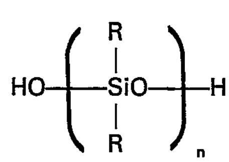

where R is selected from the group consisting of monovalent hydrocarbon radicals and halogenated monovalent hydrocarbon radicals having from 1 to 18 carbon atoms and n is a number of at least 2 such that the viscosity ranges from 5 to 300,000 mPa · s at 25°C.

4. The composition of Claim 1, wherein the crosslinking agent is a silane of the formula

$$(R'''O)_xSiR''_{4-x}$$

where R''' is a monovalent hydrocarbon radical having from 1 to 8 carbon atoms, R'' is selected from the group consisting of a monovalent hydrocarbon radical and a halogenated monovalent hydrocarbon radical having from 1 to 8 carbon atoms and x is 3 or 4 and further contains a catalyst.

5. The composition of Claim 1, wherein the crosslinking agent is a polyalkoxysiloxane in which the silicon atoms are linked through ≡Si—O—Si≡ linkages and the remaining valences of the silicon atoms are satisfied by (R'''O) and R'' radicals, where R''' is a monovalent hydrocarbon radical having from 1 to 8 carbon atoms and R'' is selected from the group consisting of a monovalent hydrocarbon radical having from 1 to 8 carbon atoms and a halogenated monovalent hydrocarbon radical having from 1 to 8 carbon atoms and further contains a catalyst.

6. The composition of Claim 4, wherein the catalyst is an organic tin compound.

7. The composition of Claim 1, wherein the particle size of the silicon nitride ranges from 0.5 to 350 microns.

8. The composition of Claim 1, wherein the hydroxylterminated organopolysiloxane is a hydroxyl-terminated polydimethylsiloxane.

9. The composition of Claim 1, wherein the crosslinking agent has an average of at least two hydrolyzable groups per molecule, selected from the group consisting of acyloxy, amino, oximo, aminoxy, acylamino and phosphato groups.

10. A method for preparing a silicone elastomer having thermally conductive properties which comprises mixing under anhydrous conditions a hydroxyl-terminated organopolysiloxane, a crosslinking agent having an average of at least two hydrolyzable groups per molecule and from 30 to 95 percent by weight of a filler, based on the weight of the composition of which at least 10 percent by weight of the filler is silicon nitride particles, and thereafter exposing the resultant composition to atmospheric moisture.

## Patentansprüche

1. Thermisch leitfähige Organopolysiloxanmasse, die bei Raumtemperatur unter Bildung eines Elastomeren vulkanisierbar ist, enthaltend ein endständige Hydroxylgruppen aufweisendes Organopolysiloxan, ein Vernetzungsmittel mit durchschnittlich mindestens zwei hydrolysierbaren Gruppen pro Molekül, welches mit dem endständige Hydroxylgruppen aufweisenden Organopolysiloxan zu reagieren vermag und 30 bis 95 Gew.-% eines Füllstoffs, bezogen auf das Gewicht der Masse, wobei mindestens 10 Gew.-% des Füllstoffs in Form von Siliciumnitridteilchen vorliegen.

2. Masse nach Anpruch 1, dadurch gekennzeichnet, daß die Siliciumnitridteilchen in einer Menge von 30 bis 100 Gew.-% bezogen auf das Gewicht des Füllstoffs, vorhanden sind.

3. Masse nach Anspruch 1, dadurch gekennzeichnet, daß das endständige Hydroxylgruppen aufweisende Organopolysiloxan der Formel

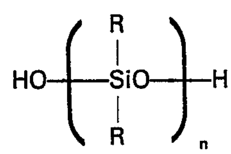

entspricht, worin R eine Gruppe, ausgewählt aus der einwertige Kohlenwasserstoffe und halogenierte einwertige Kohlenwasserstoffe umfassenden Gruppe mit 1 bis 18 Kohlenstoffatomen und n eine Zahl von mindestens 2, so daß die Viskosität bei 25°C im Bereich von 5 bis 300 000 mPa · s liegt, bedeuten.

4. Masse nach Anspruch 1, dadurch gekennzeichnet, daß das Vernetzungsmittel ein Silan der Formel

$$(R'''O)_xSiR''_{4-x}$$

ist, worin R''' eine einwertige Kohlenwasserstoffgruppe mit 1 bis 8 Kohlenstoffatomen, R'' eine Gruppe, ausgewählt aus der einwertige Kohlenwasserstoffe und halogenierte einwertige Kohlenwasserstoffe umfassenden Gruppe mit 1 bis 8 Kohlenstoffatomen und x 3 oder 4 bedeuten, und sie weiterhin einen Katalysator enthält.

5. Masse nach Anspruch 1, dadurch gekennzeichnet, daß das Verntzungsmittel ein Polyalkoxysiloxan ist, worin die Siliciumatome durch ≡Si—O—Si≡ Verknüpfungen verbunden sind und die verbleibenden Wertigkeiten der Siliciumatome durch (R'''O)- und R''-Gruppen, worin R''' eine einwertige Kohlenwasserstoffgruppe mit 1 bis 8 Kohlenstoffatomen und R'' eine Gruppe, ausgewählt aus der einwertige Kohlenwasserstoffe mit 1 bis 8 Kohlenstoffatomen und halogenierte einwertige

Kohlenwasserstoffe mit 1 bis 8 Kohlenstoffatomen umfassenden Gruppe bedeuten, gesättigt sind, und sie weiterhin einen Katalysator enthält.

6. Masse nach Anspruch 4, dadurch gekennzeichnet, daß der Katalysator eine organische Zinnverbindung ist.

7. Masse nach Anspruch 1, dadurch gekennzeichnet, daß die Teilchengröße des Siliciumnitrids im Bereich von 0,5 bis 350 Mikron liegt.

8. Masse nach Anspruch 1, dadurch gekennzeichnet, daß das endständige Hydroxylgruppen aufweisende Organopolysiloxan ein endständige Hydroxylgruppen aufweisendes Polydimethylsiloxan ist.

9. Masse nach Anspruch 1, dadurch gekennzeichnet, daß das Vernetzungsmittel durchschnittliche mindestens zwei hydrolysierbare Gruppen pro Molekül, ausgewählt aus Acyloxy-, Amino-, Oximo-, Aminoxy-, Acylamino- und Phosphatogruppen, besitzt.

10. Verfahren zur Herstellung eines Siliconelastomeren mit thermischen Leitfähigkeitseigenschaften, dadurch gekennzeichnet, daß man unter wasserfreien Bedingungen ein endständige Hydroxylgruppen aufweisendes Organopolysiloxan, ein Vernetzungsmittel mit durchschnittliche mindestens zwei hydrolysierbaren Gruppen pro Molekül und 30 bis 95 Gew-% eines Füllstoffs, bezogen auf das Gewicht der Masse, wobei mindestens 10 Gew.-% des Füllstoffs als Siliciumnitridteilchen vorliegen, vermischt und anschließend die erhaltene Mischung atmosphärischer Feuchtigkeit aussetzt.

**Revendications**

1. Composition de polyorganosiloxane, qui est vulcanisable à la température ambiante pour former unélastomère conducteur de la chaleur, cette composition comprenant un polyorganosiloxane terminé par des groupes hydroxyles, un agent de réticulation comprenant en moyenne au moins deux groupes hydrolysables par molécule, capable de réagir avec le polyorganosiloxane terminé par des groupes hydroxyles, et de 30 à 95% en poids d'une charge, sur la base du poids de la composition, au moins 10% en poids de la charge étant représentés par des particules de nitrure de silicium.

2. Composition selon la revendication 1, dans laquelle les particules de nitrure de silicium sont présentes en une quantité de 30 à 100% en poids, sur la base du poids de la charge.

3. Composition selon la revendication 1, dans laquelle le polyorganosiloxane terminé par des groupes hydroxyles est représenté par la formule

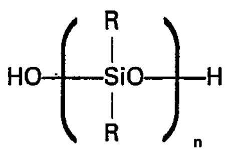

dans laquelle R est choisi parmi des radicaux hydrocarbonés monovalents et des radicaux hydrocarbonés monovalents halogénés comportant d'1 à 18 atomes de carbone, et n est un nombre valant au moins 2, tel que la viscosité se situe entre 5 et 300 000 mPa · s à 25°c.

4. Composition selon la revendication 1, dans laquelle l'agent de réticulation est une silane de formule

$$(R'''O)_xSiR''_{4-x}$$

dans laquelle R''' est un radical hydrocarboné monovalent ayant d'1 à 8 atomes de carbone, R'' est choisi parmi un radical hydrocarboné monovalent et un radical hydrocarboné monovalent halogéné ayant 1 à 8 atomes de carbone, et x vaut 3 ou 4, la composition contenant en outre un catalyseur.

5. Composition selon la revendication 1, dans laquelle l'agent de réticulation est un polyalcoxy siloxane dont les atomes de silicium sont reliés par des liaisons ≡Si—O—Si≡, et les valences restantes des atomes de silicium sont saturées ou satisfaites par des radicaux (R'''O) et R'', où R''' représente un radical hydrocarboné monovalent ayant 1 à 8 atomes de carbone, et R'' est choisi parmi un radical hydrocarboné monovalent ayant 1 à 8 atomes de carbone et un radical hydrocarboné monovalent halogéné ayant 1 à 8 atomes de carbone, la composition contenant en outre un catalyseur.

6. Composition selon la revendication 4, dans laquelle la catalyseur est un composé organique d'étain.

7. Composition selon la revendication 1, dans laquelle la dimension des particules du nitrure de silicium se situe entre 0,5 et 350 micromètres.

8. Composition selon la revendication 1, dans laquelle le polyorganosiloxane terminé par des groupes hydroxyles est un polydiméthylsiloxane terminé par des groupes hydroxyles.

9. Composition selon la revendication 1, dans laquelle l'agent de réticulation comporte en moyenne au moins deux groupes hydrolyzables par molécule, choisis parmi des groupes acyloxy, amino, oximo, aminoxy, acylamino et phosphato.

10. Procédé pour préparer un élastomère de silicone ayant des propriétés de conduction thermique, ce procédé comprenant le mélangeage, dans des conditions anhydres, d'un polyorganosiloxane terminé par des groupes hydroxyles, d'un agent de réticulation comportant en moyenne au moins deux groupes hydrolysables par molécule et de 30 à 95% en poids d'une charge, sur la base du poids de la composition, au moins 10% en poids de la charge étant constitués par des particules de niture de silicium, puis exposition de la composition résultante à l'humidité atmosphérique.